(19) Europäisches Patentamt
European Patent Office
Office européen des brevets

(11) **EP 2 163 382 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(51) Int Cl.:
***B32B 27/36*** *(2006.01)*

(21) Anmeldenummer: **09011339.0**

(22) Anmeldetag: **03.09.2009**

(54) **Siegelfähige Polyesterfolie**

Sealable polyester film

Feuille de polyester pouvant être scellée

(84) Benannte Vertragsstaaten:
**DE FR GB IT LU**

(30) Priorität: **11.09.2008 DE 102008046780**

(43) Veröffentlichungstag der Anmeldung:
**17.03.2010 Patentblatt 2010/11**

(73) Patentinhaber: **Mitsubishi Polyester Film GmbH
65203 Wiesbaden (DE)**

(72) Erfinder:
• **Konrad, Matthias, Dr.
65830 Kriftel (DE)**

• **Kuhmann, Bodo
65594 Runkel (DE)**
• **Hilkert, Gottfried, Dr.
55291 Saulheim (DE)**

(74) Vertreter: **Schweitzer, Klaus et al
Plate Schweitzer Zounek
Patentanwälte
Rheingaustrasse 196
65203 Wiesbaden (DE)**

(56) Entgegenhaltungen:
**WO-A-00/46026      WO-A-95/09885
WO-A-2007/093495   WO-A-2009/013284**

## Beschreibung

Die Erfindung betrifft eine transparente, heißsiegelfähige, biaxial orientierte Polyesterfolie umfassend eine Basisschicht B und amorphe Deckschichten A auf jeder Oberfläche der Basisschicht B. Die Erfindung betrifft weiterhin ein Verfahren zur Herstellung der Folie und ihre Verwendung.

In vielen industriellen Anwendungen werden lösemittelbasierte Klebstoffe zum Laminieren flächiger Substrate verwendet. Hintergrund dieser Erfindung ist der Ersatz solcher Klebstoffe durch eine beidseitig siegelfähige Folie.

Heißsiegelfähige Polyesterfolien im Allgemeinen sind bekannt und werden beispielsweise für Verpackungs- und industrielle Anwendungen verwendet.

In der EP-A-0 026 006 wird eine orientierte, siegelfähige Polyesterfolie mit amorpher PETG-Siegelschicht beschrieben. Die Herstellung erfolgt nach verschiedenen Laminierverfahren bzw. durch Coextrusion einer Blasfolie.

In der EP-B-1 165 317 wird eine biaxial orientierte, siegelfähige Polyesterfolie mit amorpher PETG-Siegelschicht beschrieben. Die Basisschicht dieser Folie enthält einen hohen Anteil an Isophthalterephthalat, so dass die Folie weitgehend amorph ist und sich gut verformen lässt. Dadurch hat die Folie aber eine geringe mechanische Festigkeit, was sich besonders bei dünnen Folien negativ auf die Verarbeitbarkeit auswirkt.

In der WO-A-2006/121759 wird eine biaxial orientierte Polyesterfolie mit dünnen Siegelschichten auf beiden Seiten der Folie beschrieben. Die Folie ist besonders geeignet zur LAP-Siegelung (Vorder- gegen Rückseite). Aufgrund der geringen Schichtdicken (kleiner 1 $\mu$m) ist die Siegelnahtfestigkeit gegenüber anderen Materialien jedoch niedrig.

Aufgabe der vorliegenden Erfindung war es nun, eine beidseitig heißsiegelfähige, biaxial orientierte Polyesterfolie bereitzustellen, die die Nachteile der Folien nach dem Stand der Technik nicht aufweist und sich insbesondere durch

- hohe Siegelnahtfestigkeit zu PVC und Stahl,
- gutes Wickel- und Verarbeitungsverhalten und
- einfache Herstellbarkeit

auszeichnet.

Die Aufgabe wird erfindungsgemäß durch die Bereitstellung einer transparenten, biaxial orientierten, heißsiegelbaren Polyesterfolie mit einer Basisschicht B und amorphen Deckschichten A auf jeder Seite der Basisschicht B gelöst, wobei

1) die amorphen Deckschichten A

    a) eine Dicke von 1 bis 10 $\mu$m aufweisen,
    b) im wesentlichen aus Copolyestern bestehen, die 15 bis 40 Mol-% CHDM enthalten,
    c) mehr als 0,05 Gew.-% externe Partikel enthalten (bezogen auf das Gesamtgewicht der Deckschicht A), wobei die Größe der Partikel ($d_{50}$-Wert) 1,0 bis 8,0 $\mu$m beträgt,

2) die Basisschicht B aus Polyester besteht, wobei dieser 0.1 bis 5 Mol-% CHDM enthält,
3) die Folie gegen sich selbst, PVC und Metall nach Siegelung eine Siegelnahtfestigkeit von größer 2 N/15 mm aufweist (gemessen bei 180 °C, 4 bar, 0,5 s) und
4) die Folie eine Gleitreibung von kleiner 0,5 hat.

Erfindungsgemäß weisen die Deckschichten eine Dicke von 1 bis 10 $\mu$m, bevorzugt 1,2 bis 8 $\mu$m, besonders bevorzugt 1,4 bis 6 $\mu$m, auf. Ist die Dicke der Deckschicht geringer als 1 $\mu$m, ist die Siegelung nicht ausreichend. Bei Deckschichten von größer 10 $\mu$m verschlechtert sich das Wickelverhalten der Folie.

Die amorphen Deckschichten bestehen zweckmäßigerweise zu mindestens 90 Gew.-% aus Polyester und enthalten 15 bis 40 Mol-% CHDM. In diesem Bereich weisen die Coplyester keine oder nur eine sehr geringe Kristallinität auf und sind somit als Siegelrohstoff geeignet.

Zur Erzielung einer guten Wickelung und einer guten Verarbeitbarkeit der Folie enthalten die Deckschichten mehr als 0,05 Gew.-% Partikel, bevorzugt mehr als 0,1 Gew.-% und besonders bevorzugt mehr als 0,15 Gew.-% Partikel (bezogen auf das Gesamtgewicht der jeweiligen Deckschicht). Die Größe der Partikel ($d_{50}$-Wert) liegt im Bereich zwischen 1,0 und 8,0 $\mu$m, bevorzugt von 2,0 bis 7,0 $\mu$m. Bei $d_{50}$-Werten von kleiner 1,0 $\mu$m ist die Gleitreibung der Folie zu hoch, Bei $d_{50}$-Werten von größer 8,0 $\mu$m kommt es zu Problemen mit der Filtration des Polymers der einzelnen coextrudierten Schichten.

Typische Partikel, die in den Deckschichten (A) verwendet werden können, sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder partikelförmige Polymere wie z. B. vernetzte Polystyrol- oder Arcrylat-Partikel. Die Art und Menge der Partikel wird bevorzugt so ausgewählt, dass die Folie transparent (Trübung <10 %) bleibt.

Der Polyester der Basisschicht der Folie enthält 0,1 bis 5 Mol-%, bevorzugt 0,2 bis 4,0 Mol-%, CHDM. Dadurch wird die Reißdehnung der Folie erhöht und die Herstellbarkeit und die Verarbeitbarkeit verbessern sich. Da gleichzeitig die Reißfestigkeit abnimmt, sollte der CHDM-Anteil höchstens 5 Mol-% betragen.

Die Folie zeigt gute Siegeleigenschaften gegen sich selbst, Hart- und Weich-PVC und Metall. Bei Temperaturen deutlich unter dem Schmelzpunkt der Basisschicht haftet die Folie unter Druck gut auf den genannten Materialien. Nach der Siegelung bei 180 °C (4 bar, 0,5 s) ist die Siegelnahtfestigkeit in allen Fällen größer als 2 N/15 mm, bevorzugt größer als 2,5 N/15 mm, besonders bevorzugt größer 3 N/15 mm.

## Verwendete Polymere für die Basisschicht (B)

Die Basisschicht (B) der Folie besteht aus einem thermoplastischen Polyester, der im Allgemeinen die folgenden Dicarboxylate und Alkylene, jeweils bezogen auf die Gesamtdicarboxylat- bzw. Gesamtalkylenmenge, beinhaltet:

- mehr als 90 Mol-%, bevorzugt mehr als 95 Mol-%, Terephthalat,
- mehr als 90 Mol-%, bevorzugt mehr als 95 Mol-%, Ethylen,
- 0,1 bis 5,0 Mol-%, bevorzugt 0,2-4,0 Mol-%, 1,4-Bis-methylen-cyclohexan.

Eventuell vorhandene weitere Dicarboxylate und Alkylene entstammen anderen aliphatischen oder aromatischen Dicarbonsäuren bzw. Diolen.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren; beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die $(C_3$ bis $C_{19})$-Alkandisäuren besonders geeignet, wobei der Alkanteil geradkettig oder verzweigt sein kann.

## Polymere für die amorphen Deckschichten (A)

Die bevorzugt durch Coextrusion auf die Basisschicht (B) aufgebrachten amorphen Deckschichten (A) bestehen im Wesentlichen aus Copolyestern, die überwiegend aus Terephthalsäure-Einheiten und aus Ethylenglykol- und 1,4-Bis-hydroxymethyl-cyclohexan (= 1,4-Cyclohexandimethanol (CHDM))-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester sind solche, die aus Ethylenterephthalat- und 1,4-Cyclohexandimethylenterephthalat-Einheiten aufgebaut sind. Der Anteil an Ethylenterephthalat beträgt 60 bis 85 Mol-% und der entsprechende Anteil an Cyclohexandimethylenterephthalat 40 bis 15 Mol-%. Bevorzugt sind weiterhin Copolyester, bei denen der Anteil an Ethylenterephthalat 65 bis 80 Mol-% und der entsprechende Anteil an Cyclohexandimethylenterephthalat 37 bis 18 Mol-% beträgt, und ganz bevorzugt sind Copolyester, bei denen der Anteil an Ethylenterephthalat 70 bis 80 Mol-% und der entsprechende Anteil an Cyclohexandimethylenterephthalat 35 bis 20 Mol-% beträgt.

Die Herstellung der Polyester für die Basis- und Deckschichten der erfindungsgemäßen Folien kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-, Aluminium- oder Germanium-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Basisschicht (B) kann zusätzlich übliche Additive wie beispielsweise UV-Stabilisatoren, Flammhemmer oder Hydrolysestabilisatoren enthalten. Diese Additive werden zweckmäßig dem Polymer bzw. der Polymermischung bereits vor dem Aufschmelzen zugesetzt. Als Stabilisatoren werden vorteilhaft beispielsweise Phosphorverbindungen wie Phosphorsäure oder Phosphorsäureester eingesetzt.

Die Gesamtdicke der erfindungsgemäßen Polyesterfolie kann innerhalb weiter Grenzen variieren. Sie beträgt bevorzugt 10 bis 125 $\mu$m, insbesondere 12 bis 100 $\mu$m, vorzugsweise 15 bis 75 $\mu$m. Erfindungsgemäß ist die Folie dreischichtig und umfasst die Basisschicht B und die amorphen Deckschichten A auf jeder Seite der Basisschicht B.

Die Gleitreibung von kleiner 0,5 wird erreicht, wenn die amorphen Deckschichten die genannte Menge an Partikeln von mindestens 0,05 % in einer Größe ($d_{50}$-Wert) von 1 bis 8 $\mu$m enthalten.

Die Erfindung betrifft auch ein Verfahren zur Herstellung der erfindungsgemäßen Polyesterfolie nach dem an sich aus der Literatur bekannten Coextrusionsverfahren.

Im Rahmen dieses Verfahrens wird so vorgegangen, dass die den einzelnen Schichten A und B der Folie entsprechenden Schmelzen durch eine Flachdüse coextrudiert werden, die so erhaltene Folie zur Verfestigung auf einer oder mehreren Walzen abgezogen wird, die Folie anschließend biaxial gestreckt und die biaxial gestreckte Folie thermofixiert wird.

Die biaxiale Verstreckung wird im Allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe mehrerer entsprechend dem angestrebten Streckverhältnis verschieden schnell laufender Walzen durchführen. Zum Querverstrecken benutzt man allgemein einen entsprechenden Kluppenrahmen.

Zunächst werden wie beim Coextrusionsverfahren üblich das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3,0:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur von ca. 150 bis 240 °C gehalten. Anschließend wird die Folie in üblicher Weise aufgewickelt.

Eigenschaften

Die nachstehende Tabelle (Tabelle 1) fasst die wichtigsten Folieneigenschaften noch einmal zusammen:

**Tabelle 1**

| Eigenschaft | Zweckmäßiger Bereich | bevorzugt | besonders bevorzugt | Einheit | Messmethode/ Bemerkung |
|---|---|---|---|---|---|
| Dicke der Deckschicht | 1,0 - 10,0 | 1,2 - 8,0 | 1,4 - 6,0 | $\mu$m | |
| CHDM-Gehalt der Deckschichten | 15 - 40 | 18 - 37 | 20 - 35 | Mol-% | |
| Partikelgehalt der Deckschichten | > 0,05 | > 0,10 | > 0,15 | Gew.-% | |
| CHDM-Gehalt der Basisschicht | 0,1 - 5,0 | 0,2 - 4,0 | | Mol.-% | |
| Siegelung | > 2,0 | > 2,5 | > 3,0 | N/15 mm | DIN 55529 180 °C, 0,5 s |
| Gleitreibung | < 0,5 | < 0,45 | < 0,4 | | DIN 53375 |
| Glanz der Folie | > 100 | > 110 | > 120 | | DIN 67530, Messwinkel 20° |
| Trübung | < 10 | < 8 | < 6 | % | ASTM D 1003 - 61 Methode A |

Im Folgenden wird die Erfindung anhand von Beispielen näher erläutert. Für die Bestimmung der Eigenschaften wurden die folgenden Messmethoden verwendet:

### Siegelnahtfestigkeit (DIN 55529)

Zur Bestimmung der Siegelnahtfestigkeit der Folie gegenüber sich selbst werden zwei 15 mm breite Folienstreifen der erfindungsgemäßen Folie aufeinander gelegt und bei 180 °C, einer Zeit von 0,5 s und einem Druck von 4 bar (Gerät: Brugger Typ NDS, einseitig beheizte Siegelbacke) zusammengepresst. Um das Kleben an der Siegelbacke zu vermeiden, wird eine 12 $\mu$m dicke kristalline Polyesterfolie zwischen die erfindungsgemäße Folie und die Siegelbacke gelegt. Die Siegelnahtfestigkeit (Höchstkraft) wird unter einem Abzugswinkel von 90° (90°-Peel-Methode) mit einer Geschwindigkeit von 200 mm/min bestimmt.

Zur Bestimmung der Siegelnahtfestigkeit der Folie gegenüber Metall bzw. PVC wird ein 15 mm breiter Folienstreifen mit der amorphen Seite auf einen gleich breiten Streifen Blech aus ECCS-Stahl bzw. PVC gelegt. Wie oben beschrieben wird eine kristalline 12 $\mu$m-Folie auf die erfindungsgemäße Folie gelegt, um das Anhaften an der Siegelbacke zu vermeiden. Die Siegelnahtfestigkeit (Höchstkraft) wird aufgrund der Steifigkeit des Substrats unter einem Abzugswinkel von 180° bestimmt. Von Siegelung kann man sprechen, wenn die gemessene Kraft > 1 N/15 mm ist.

### Trübung

Die Trübung wird nach ASTM D 1003 - 61 Methode A bestimmt.

### Reibung

Die Reibung wird nach DIN 53375 bestimmt. Die Gleitreibungszahl wird 14 Tage nach der Produktion gemessen.

### Glanz

Der Glanz wird nach DIN 67530 bestimmt (20°-Einstrahlwinkel).

### Mittlerer Partikeldurchmessers $d_{50}$

Die Bestimmung des mittleren Partikeldurchmessers $d_{50}$ wird mittels Laser auf einem Master Sizer (Malvern Instruments, GB) nach der Standardmethode durchgeführt (andere Messgeräte sind z. B. Horiba LA 500 (Horiba Ltd., JP) oder Helos (Sympatec GmbH, DE), welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes.

### SV-Wert (Standard Viscosity)

Die Standardviskosität SV (DCE) wird, angelehnt an DIN 53726, bei 25 °C abweichend zur Norm in Dichloressigsäure gemessen. Die intrinsische Viskosität (IV) von Polyethylenterephthalat berechnet sich wie folgt aus der Standardviskosität:

$$\text{IV} = [\eta] = 6{,}907 * 10^{-4}\ \text{SV (DCE)} + 0{,}063096\ [\text{dl/g}]$$

### Beispiel 1

Zur Herstellung der nachfolgend beschriebenen Folie wurden folgende Ausgangsmaterialien verwendet:

Deckschichten A:

| | |
|---|---|
| 95 Gew.-% | Copolyester I aus 70 Mol-% Ethylenterephthalat und 30 Mol-% Cyclohexandimethylenterephthalat mit einem SV-Wert von 1000 |
| 5 Gew.-% | Masterbatch aus 95 Gew.-% Copolyester I und 5 Gew.-% Sylysia 430 (synthetisches $SiO_2$ der Fa. Fuji, JP; $d_{50}$: 3,4 $\mu$m) |

(fortgesetzt)

Basisschicht B:

95 Gew.-%        Polyethylenterephthalat mit einem SV-Wert von 800

5 Gew.-%         Copolyester I aus 80 Mol.% Ethylenterephthalat und 20 Mol%
                 Cyclohexandimethylenterephthalat mit einem SV-Wert von 1000

Die o. g. Rohstoffe wurden in je einem Extruder pro Schicht aufgeschmolzen und durch eine dreischichtige Breitschlitzdüse mit dem Aufbau A-B-A auf eine gekühlte Abzugswalze extrudiert. Die so erhaltene amorphe Vorfolie wurde dann zunächst längsverstreckt. Danach wurde die Folie quergestreckt, fixiert und aufgerollt (Enddicke der Folie 20 $\mu$m, Deckschichten je 2 $\mu$m). Die Bedingungen in den einzelnen Verfahrensschritten waren:

| Längsstreckung: | Temperatur: | 80 - 120 °C |
| | Längsstreckverhältnis: | 4,0 |
| Querstreckung: | Temperatur: | 80 - 135 °C |
| | Querstreckverhältnis: | 4,0 |
| Fixierung: | | 2 s bei 230 °C |

Die Eigenschaften der so erhaltenen Folie sind in der Tabelle 2 aufgeführt.

**Beispiel 2**

Im Vergleich zu Beispiel 1 wurde jetzt eine 50 $\mu$m dicke Folie produziert. Die Deckschichtdicke der amorphen Schichten A betrug 5 $\mu$m. Die Siegelnahtfestigkeit ist höher als in Beispiel 1.

**Beispiel 3**

Im Vergleich zu Beispiel 1 wurde jetzt der Partikelgehalt der amorphen Deckschichten A geändert:

Deckschichten A:

92 Gew.-%        Copolyester I aus 70 Mol-% Ethylenterephthalat und 30 Mol-% Cyclohexandimethylenterephthalat mit einem SV-Wert von 1000

8 Gew.-%         Masterbatch aus 95 Gew.-% Copolyester I und 5 Gew.-% Sylysia 430 (synthetisches $SiO_2$ der Fa. Fuji, JP; $d_{50}$: 3,4 $\mu$m)

Gegenüber Beispiel 1 hat sich das Wickelverhalten verbessert.

**Vergleichsbeispiel 1**

Im Vergleich zu Beispiel 1 wurde jetzt die Folie geändert analog WO-A-2006/121759, Beispiel 2. Die Gesamtdicke der Folie war 12 $\mu$m, die Deckschichtdicke betrug 0,6 $\mu$m. Die Zusammensetzung der amorphen Deckschichten A war:

Deckschichten A:

94,4 Gew.-%      Copolyester II aus 81 Mol% Ethylenterephthalat und 19 Mol-% Ethylenisophthalat mit einem SV-Wert von 850

5,6 Gew.-%       Masterbatch aus 95 Gew.-% Copolyester II und 5 Gew.-% Sylysia 430 (synthetisches $SiO_2$ der Fa. Fuji, JP; $d_{50}$: 3,4 $\mu$m)

Die wichtigsten Eigenschaften der so hergestellten Folien sind in der nachfolgenden Tabelle 2 zusammengefasst.

**Tabelle 2**

| | B1 | B2 | B3 | V1 |
|---|---|---|---|---|
| Foliendicke ($\mu$m) | 20 | 50 | 20 | 12 |
| Dicke der Deckschichten A ($\mu$m) | 2,0 | 5,0 | 2,0 | 0,61 |
| Partikelgehalt der Deckschichten A (%) | 0,25 | 0,25 | 0,4 | 0,28 |
| Siegelnahtfestigkeit gegen sich selbst, FIN (N/15 mm) | 3,5 | 4,2 | 3,2 | 1,6 |
| Siegelnahtfestigkeit gegen ECCS-Blech (N/15 mm) | 3,3 | 4,0 | 3,1 | 1,8 |
| Siegelnahtfestigkeit gegen 150 $\mu$m PVC-Folie (N/15 mm) | 5,8 | 6,4 | 5,5 | 0,2 |
| Gleitreibung | 0,38 | 0,34 | 0,37 | 0,36 |
| Glanz der Folie | 160 | 153 | 155 | 161 |
| Trübung (%) | 3,4 | 4,1 | 3,8 | 3,4 |

**Patentansprüche**

1. Dreischichtige, biaxial orientierte Polyesterfolie, umfassend eine Basisschicht B und jeweils eine amorphe Deckschicht A auf jeder Seite der Basisschicht B, wobei die Deckschicht A

   a) eine Dicke von 1 bis 10 $\mu$m aufweist,
   b) überwiegend aus einem Copolyester besteht, der 15 bis 40 Mol-% Cyclohexandimethylenterephthalat (CHDM) enthält,
   c) mehr als 0,05 Gew.-% externe Partikel enthält (bezogen auf das Gesamtgewicht der Deckschicht A), wobei die Größe der Partikel ($d_{50}$-Wert) 1,0 bis 8,0 mm beträgt, die Basisschicht B

   aus Polyester besteht, wobei dieser 0,1 bis 5 Mol-% CHDM enthält, die Folie

   i) gegen sich selbst, PVC und Metall nach Siegelung eine Siegelnahtfestigkeit von größer 2 N/15 mm aufweist (Siegelung bei 180 °C, 4 bar, 0,5 s) und
   ii) eine Gleitreibung von kleiner 0,5 aufweist.

2. Polyesterfolie nach Anspruch 1, wobei die Dicke der Deckschicht A 1,2 bis 8 $\mu$m, bevorzugt 1,4 bis 6 $\mu$m, beträgt.

3. Polyesterfolie nach Anspruch 1 oder 2, wobei die Deckschicht A mehr als 0,1 Gew.-%, bevorzugt mehr als 0,15 Gew.-%, externe Partikel enthält.

4. Polyesterfolie nach einem der Ansprüche 1 bis 3, wobei die Basisschicht B 0,2 bis 4,0 Mol-% CHDM enthält.

5. Polyesterfolie nach einem der Ansprüche 1 bis 4, wobei die Siegelnahtfestigkeit größer als 2,5 N/15 mm, bevorzugt größer 3 N/15 mm, ist.

6. Polyesterfolie nach einem der Ansprüche 1 bis 5, wobei die Größe der Partikel ($d_{50}$-Wert) in der Deckschicht A 2,0 bis 7,0 $\mu$m, beträgt.

7. Polyesterfolie nach einem der Ansprüche 1 bis 6, wobei die Partikel der Deckschicht A anorganische und/oder organische Partikel sind.

8. Polyesterfolie nach Anspruch 7, wobei die Partikel der Deckschicht A ausgewählt werden aus der Gruppe, bestehend aus Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin, vernetztes Polystyrol, vernetztes Arcrylat und Mischungen aus zwei oder mehreren derselben.

9. Polyesterfolie nach einem der Ansprüche 1 bis 8, wobei die Basisschicht B der Folie aus einem thermoplastischen Polyester besteht, der die folgenden Dicarboxylate und Alkylene, jeweils bezogen auf die Gesamtdicarboxylat- bzw. Gesamtalkylenmenge, beinhaltet:

- mehr als 90 Mol-%, bevorzugt mehr als 95 Mol-%, Terephthalat,
- mehr als 90 Mol-%, bevorzugt mehr als 95 Mol-%, Ethylen,
- 0,1 bis 5,0 Mol-%, bevorzugt 0,2-4,0 Mol-%, 1,4-Bis-methylen-cyclohexan.

10. Polyesterfolie nach einem der Ansprüche 1 bis 9, wobei die Deckschicht A 60 bis 85 Mol-%, bevorzugt 65 bis 80 Mol-%, besonders bevorzugt 70 bis 80 Mol-%, Ethylenterephthalat und 40 bis 15 Mol-%, bevorzugt 37 bis 18 Mol-%, besonders bevorzugt 35 bis 20 Mol-%, Cyclohexandimethylenterephthalat enthält.

11. Polyesterfolie nach einem der Ansprüche 1 bis 10, wobei die Folie eine Gesamtdicke von 10 bis 125 $\mu$m, bevorzugt 12 bis 100 $\mu$m, besonders bervorzugt 15 bis 75 $\mu$m, aufweist.

12. Verfahren zur Herstellung einer Folie nach Anspruch 1, wobei man die den einzelnen Schichten A und B der Folie entsprechenden Schmelzen durch eine Flachdüse coextrudiert, die so erhaltene Folie zur Verfestigung auf einer oder mehreren Walzen abzieht, die Folie anschließend biaxial streckt und die biaxial gestreckte Folie thermofixiert und aufrollt, wobei die Deckschichten A amorph sind, eine Dicke von 1 bis 10 $\mu$m aufweisen und überwiegend aus einem Copolyester bestehen, wobei der Copolyester 15 bis 40 Mol-% CHDM und mehr als 0,05 Gew.-% externe Partikel enthält (bezogen auf das Gesamtgewicht der Deckschicht A), wobei die Größe der Partikel ($d_{50}$-Wert) 1,0 bis 8,0 $\mu$m beträgt und die Basisschicht B aus Polyester besteht, wobei dieser 0,1 bis 5 Mol-% CHDM enthält.

13. Verwendung einer Polyesterfolie nach Anspruch 1 als Verpackungsfolie oder Kaschierfolie oder Laminierfolie, bevorzugt zur Siegelung gegen PVC-Folien und metallische Substrate.

**Claims**

1. A three-layer biaxially oriented polyester film comprising a base layer B and an amorphous top layer A on each side of the base layer B, wherein the top layer A

   a) has a thickness of 1 to 10 $\mu$m,
   b) consists predominantly of a copolyester containing 15 to 40 mol% of cyclohexane dimethylene terephthalate (CHDM),
   c) contains more than 0.05 % by weight of external particles (based on the total weight of the top layer A), the size of the particles ($d_{50}$) being 1.0 to 8.0 $\mu$m,

   the base layer B
   consists of polyester which contains 0.1 to 5 mol% of CHDM,
   and the film

   i) has a seal seam strength to itself, PVC and metal after sealing of greater than 2 N/15 mm (sealing at 180 °C, 4 bar, 0.5 s) and
   ii) sliding friction of less than 0.5.

2. The polyester film as claimed in claim 1, wherein the thickness of the top layer A is 1.2 to 8 $\mu$m, preferably 1.4 to 6 $\mu$m.

3. The polyester film as claimed in claim 1 or 2, wherein the top layer A contains more than 0.1 % by weight, preferably more than 0.15 % by weight, of external particles.

4. The polyester film as claimed in one of claims 1 to 3, wherein the base layer B contains 0.2 to 4.0 mol% of CHDM.

5. The polyester film as claimed in one of claims 1 to 4, wherein the seal seam strength is greater than 2.5 N/15 mm, preferably greater than 3 N/15 mm.

6. The polyester film as claimed in one of claims 1 to 5, wherein the size of the particles ($d_{50}$) in the top layer A is 2.0 to 7.0 $\mu$m.

7. The polyester film as claimed in one of claims 1 to 6, wherein the particles of the top layer A are inorganic and/or organic particles.

8. The polyester film as claimed in claim 7, wherein the particles of the top layer A are selected from the group consisting of calcium carbonate, amorphous silica, talc, magnesium carbonate, barium carbonate, calcium sulfate, barium sulfate, lithium phosphate, calcium phosphate, magnesium phosphate, aluminum oxide, lithium fluoride, calcium salts, barium salts, zinc salts or manganese salts of the dicarboxylic acids used, carbon black, titanium dioxide, kaolin, crosslinked polystyrene, crosslinked acrylate and mixtures of two or more thereof.

9. The polyester film as claimed in one of claims 1 to 8, wherein the base layer B of the film consists of a thermoplastic polyester which includes the following dicarboxylates and alkylenes, based in each case on the total amount of dicarboxylate or total amount of alkylene:

- more than 90 mol%, preferably more than 95 mol%, of terephthalate,
- more than 90 mol%, preferably more than 95 mol%, of ethylene,
- 0.1 to 5.0 mol%, preferably 0.2-4.0 mol%, of 1,4-bismethylenecyclohexane.

10. The polyester film as claimed in one of claims 1 to 9, wherein the top layer A contains 60 to 85 mol%, preferably 65 to 80 mol%, more preferably 70 to 80 mol%, of ethylene terephthalate and 40 to 15 mol%, preferably 37 to 18 mol%, more preferably 35 to 20 mol%, of cyclohexanedimethylene terephthalate.

11. The polyester film as claimed in one of claims 1 to 10, wherein the film has a total thickness of 10 to 125 $\mu$m, preferably 12 to 100 $\mu$m, more preferably 15 to 75 $\mu$m.

12. A process for producing a film as claimed in claim 1, wherein the melts corresponding to the individual layers A and B of the film are coextruded through a flat die, the film thus obtained is consolidated by drawing it off on one or more rolls, then the film is biaxially stretched and the biaxially stretched film is heatset and rolled up, the top layers A being amorphous, having a thickness of 1 to 10 $\mu$m and consisting predominantly of a copolyester, the copolyester containing 15 to 40 mol% of CHDM and more than 0.05 % by weight of external particles (based on the total weight of the top layer A), the size of the particles ($d_{50}$) being 1.0 to 8.0 $\mu$m and the base layer B consisting of polyester which contains 0.1 to 5 mol% of CHDM.

13. The use of a polyester film as claimed in claim 1, as a packaging film or laminating film, preferably for sealing to PVC films and metallic substrates.

**Revendications**

1. Feuille de polyester à trois couches, orientée biaxialement, comprenant une couche de base B et, respectivement, une couche de recouvrement amorphe A sur chaque face de la couche de base B, dans laquelle la couche de recouvrement A

a) présente une épaisseur de 1 à 10 $\mu$m,
b) est constituée principalement d'un copolyester qui contient 15 à 40 % en mole de téréphtalate de cyclohexanediméthylène (CHDM),
c) contient plus de 0,05 % en poids de particules externes (par rapport au poids total de la couche de recouvrement A), dans laquelle la taille des particules (valeur $d_{50}$) est de 1,0 à 8,0 $\mu$m,

la couche de base B
est constituée de polyester, dans laquelle celui-ci contient 0,1 à 5 % en mole de CHDM,
la feuille

i) présente, vis-à-vis d'elle-même, du PVC et du métal, après scellage, une résistance du cordon de scellage supérieure à 2 N/15 mm (scellage à 180 °C, 4 bars et 0,5 s) et
ii) présente un frottement de glissement inférieur à 0,5.

2. Feuille de polyester selon la revendication 1, dans laquelle l'épaisseur de la couche de recouvrement A est de 1,2 à 8 $\mu$m, de préférence de 1,4 à 6 $\mu$m.

3. Feuille de polyester selon la revendication 1 ou 2, dans laquelle la couche de recouvrement A contient plus de 0,1 % en poids, de préférence plus de 0,15 % en poids, de particules externes.

4. Feuille de polyester selon l'une quelconque des revendications 1 à 3, dans laquelle la couche de base B contient 0,2 à 4,0 % en mole de CHDM.

5. Feuille de polyester selon l'une quelconque des revendications 1 à 4, dans laquelle la résistance du cordon de scellage est supérieure à 2,5 N/15 mm, de préférence supérieure à 3 N/15 mm.

6. Feuille de polyester selon l'une quelconque des revendications 1 à 5, dans laquelle la taille des particules (valeur $d_{50}$) dans la couche de recouvrement A est de 2,0 à 7,0 $\mu$m.

7. Feuille de polyester selon l'une quelconque des revendications 1 à 6, dans laquelle les particules de la couche de recouvrement A sont des particules inorganiques et/ou organiques.

8. Feuille de polyester selon la revendication 7, dans laquelle les particules de la couche de recouvrement A sont choisies dans le groupe constitué du carbonate de calcium, de l'acide silicique amorphe, du talc, du carbonate de magnésium, du carbonate de baryum, du sulfate de calcium, du sulfate de baryum, du phosphate de lithium, du phosphate de calcium, du phosphate de magnésium, de l'oxyde d'aluminium, du fluorure de lithium, de sels de calcium, de baryum, de zinc ou de manganèse des acides dicarboxyliques utilisés, de la suie, du dioxyde de titane, du kaolin, du polystyrène réticulé, de l' acrylate réticulé et de mélanges de deux ou plusieurs de ces composés.

9. Feuille de polyester selon l'une quelconque des revendications 1 à 8, sans laquelle la couche de base B de la feuille est constituée d'un polyester thermoplastique, qui comprend les dicarboxylates et les alkylènes suivants, respectivement par rapport à la quantité totale de dicarboxylate ou à la quantité totale d'alkylène :

   - plus de 90 % en mole, de préférence plus de 95 % en mole, de téréphtalate,
   - plus de 90 % en mole, de préférence plus de 95 % en mole, d'éthylène,
   - 0,1 à 5,0 % en mole, de préférence 0,2 à 4,0 % en mole, de 1,4-bisméthylène-cyclohexane.

10. Feuille de polyester selon l'une quelconque des revendications 1 à 9, dans laquelle la couche de recouvrement A contient 60 à 85 % en mole, de préférence 65 à 80 % en mole, mieux encore 70 à 80 % en mole, de téréphtalate d'éthylène et 40 à 15 % en mole, de préférence 37 à 18 % en mole, mieux encore 35 à 20 % en mole, de téréphtalate de cyclohexanediméthylène.

11. Feuille de polyester selon l'une quelconque des revendications 1 à 10, dans laquelle la feuille présente une épaisseur totale de 10 à 125 $\mu$m de préférence de 12 à 100 $\mu$m, mieux encore de 15 à 75 $\mu$m.

12. Procédé pour la fabrication d'une feuille selon la revendication 1, dans laquelle les masses fondues correspondant aux couches individuelles A et B de la feuille sont co-extrudées à travers une filière plate, la feuille obtenue de la sorte est extraite à des fins de solidification sur un ou plusieurs cylindres, la feuille est ensuite étirée biaxialement et la feuille étirée biaxialement est soumise à une thermofixation et enroulée, dans lequel les couches de recouvrement A sont amorphes, présentent une épaisseur de 1 à 10 $\mu$m et sont constituées principalement d'un copolyester, dans lequel le copolyester contient 15 à 40 % en mole de CHDM et plus de 0, 05 % en poids de particules externes (par rapport au poids total de la couche de recouvrement A), dans lequel la taille des particules (valeur $d_{50}$) est de 1,0 à 8,0 $\mu$m et la couche de base B est constituée de polyester, dans lequel celui-ci contient 0,1 à 5 % en mole de CHDM.

13. Utilisation d'une feuille de polyester selon la revendication 1, comme feuille d'emballage, comme feuille de contre-collage ou comme feuille de laminage, de préférence pour le scellage contre des feuilles de PVC et des substrats métalliques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0026006 A
- EP 1165317 B
- WO 2006121759 A